# EUROPEAN PATENT APPLICATION

(11) **EP 4 844 583 A1**
(43) Date of publication of application: **25.11.2026**
(21) Application number: 26176171.2
(22) Date of filing: 04.05.2026
(51) Int. Cl.: G06F 11/07, G06F 9/4401, G06F 11/14, G06F 11/28, G06F 11/22, G06F 11/27, G06F 21/51, G06F 21/52

(54) **PROCESSING SYSTEM, RELATED DEVICE AND METHOD**

(30) Priority: 20.05.2025 IT 202500011314
(71) Applicant: STMicroelectronics International N.V., 1228 Plan-les-Ouates, Geneva (CH)
(72) Inventor: COLOMBO, Roberto, D-81829 Munich (DE)
(74) Representative: Buzzi, Notaro & Antonielli d'Oulx S.p.A.

(57) **Abstract**

A processing system (10a) is disclosed. The processing system (10a) is configured to monitor a plurality (N) of tracking points and comprises a microprocessor (102; 1020) a non-volatile memory (104) and a tracking point checker circuit (30). The microprocessor (102; 1020) is configured to execute a firmware comprising software instructions and the non-volatile memory (104) is configured to store a reference tracking point bit pattern (RP) comprising for each tracking point respective one or more reference bits. The tracking point checker circuit (30) comprises a register (304), a register interface (302) and a comparison circuit (310). Specifically, the register (304) is configured to store a tracking point bit pattern (CP) comprising for each tracking point respective one or more bits. The register interface (302) is configured to receive a set request (SET) from the microprocessor (102; 1020), wherein the set request (SET) indicates (TPID) that a given tracking point has been reached. In response to receiving a set request (SET), the register interface (302) asserts at least one bit of the one or more bits associated with the tracking point indicated (TPID) in the set request (SET). The comparison circuit (310) is configured to compare the respective one or more bits of the tracking point bit pattern (CP) associated with at least one tracking point with the respective one or more reference bits of the reference tracking point bit pattern (RP). In response to determining that the respective one or more bits of the tracking point bit pattern (CP) associated with at least one tracking point do not correspond to the respective one or more reference bits of the reference tracking point bit pattern (RP), the comparison circuit (310) asserts a tracking point error signal (ERR_{S}).

## Description

### Technical Field

Embodiments of the present disclosure relate to the monitoring of the correct operation of a microprocessor.

### Background

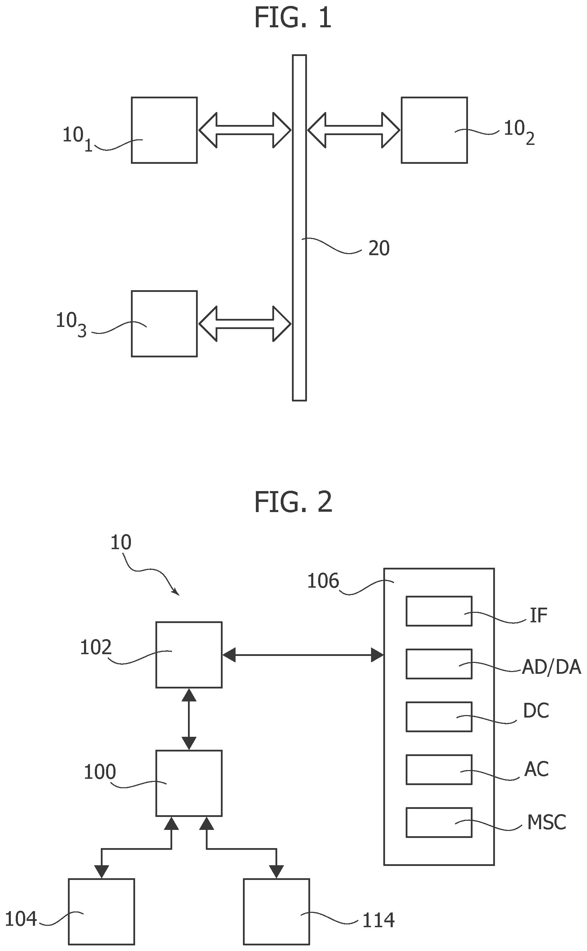

Figure 1 shows a typical electronic system, such as the electronic system of a vehicle, comprising a plurality of processing systems 10, such as embedded systems or integrated circuits, e.g., a Field Programmable Gate Array (FPGA), a Digital Signal Processor (DSP) or a micro-controller (e.g., dedicated to the automotive market).

For example, in Figure 1 are shown three processing systems 10₁, 10₂ and 10₃ connected through a suitable communication system 20. For example, the communication system may include a vehicle control bus, such as a Controller Area Network (CAN) bus, and possibly a multimedia bus, such as a Media Oriented Systems Transport (MOST) bus, connected to vehicle control bus via a gateway. Typically, the processing systems 10 are located at different positions of the vehicle and may include, e.g., an Engine Control Unit, a Transmission Control Unit (TCU), an Anti-lock Braking System (ABS), a Body Control Module (BCM), and/or a navigation and/or multimedia audio system. Accordingly, one or more of the processing systems 10 may also implement real-time control and regulation functions. These processing systems are usually identified as Electronic Control Units.

Figure 2 shows a block diagram of an exemplary digital processing system 10, such as a micro-controller, which may be used as any of the processing systems 10 of Figure 1.

In the example considered, the processing system 10 comprises a microprocessor 102, usually the Central Processing Unit (CPU), programmed via software instructions. Usually, the software executed by the microprocessor 102 is stored in a non-volatile program memory 104, such as a Flash memory or EEPROM. Thus, the memory 104 is configured to store the firmware of the processing unit 102, wherein the firmware includes the software instructions to be executed by the microprocessor 102. Generally, the non-volatile memory 104 may also be used to store other data, such as configuration data, e.g., calibration data.

The microprocessor 102 usually has associated also a volatile memory 104b, such as a Random-Access-Memory (RAM). For example, the memory 104b may be used to store temporary data.

As shown in Figure 2, usually the communication with the memories 104 and/or 104b is performed via one or more memory controllers 100. The memory controller(s) 100 may be integrated in the microprocessor 102 or connected to the microprocessor 102 via a communication channel, such as a system bus of the processing system 10. Similarly, the memories 104 and/or 104b may be integrated with the microprocessor 102 in a single integrated circuit, or the memories 104 and/or 104b may be in the form of a separate integrated circuit and connected to the microprocessor 102, e.g., via the traces of a printed circuit board.

In the example considered, the microprocessor 102 may have associated one or more (hardware) resources/peripherals 106 selected from the group of:
- one or more communication interfaces IF, e.g., for exchanging data via the communication system 20, such as a Universal asynchronous receiver/transmitter (UART), Serial Peripheral Interface Bus (SPI), Inter-Integrated Circuit (I²C), Controller Area Network (CAN) bus, and/or Ethernet interface, and/or a debug interface; and/or
- one or more analog-to-digital converters AD and/or digital-to-analog converters DA; and/or
- one or more dedicated digital components DC, such as hardware timers and/or counters, or a cryptographic co-processor; and/or
- one or more analog components AC, such as comparators, sensors, such as a temperature sensor, etc.; and/or
- one or more mixed signal components MSC, such as a PWM (Pulse-Width Modulation) driver.

Generally, a dedicated digital components DC may also correspond to a FPGA integrated in the processing system 10. For example, in this case, the memory 104 may also comprise the program data for such a FPGA.

Accordingly, the digital processing system 10 may support different functionalities. For example, the behavior of the microprocessor 102 is determined by the firmware stored in the memory 104, e.g., the software instructions to be executed by a microprocessor 102 of a micro-controller 10. Thus, by installing a different firmware, the same hardware (micro-controller) can be used for different applications.

In this respect, future generation of such processing systems 10, e.g., microcontrollers adapted to be used in automotive applications, are expected to exhibit an increase in complexity, mainly due to the increasing number of requested functionalities (new protocols, new features, etc.) and to the tight constraints of execution conditions (e.g., lower power consumption, increased calculation power and speed, etc.).

For example, recently more complex multi-core processing systems 10 have been proposed. For example, such multi-core processing systems may be used to execute (in parallel) several of the processing systems 10 shown in Figure 1, such as several ECUs of a vehicle.

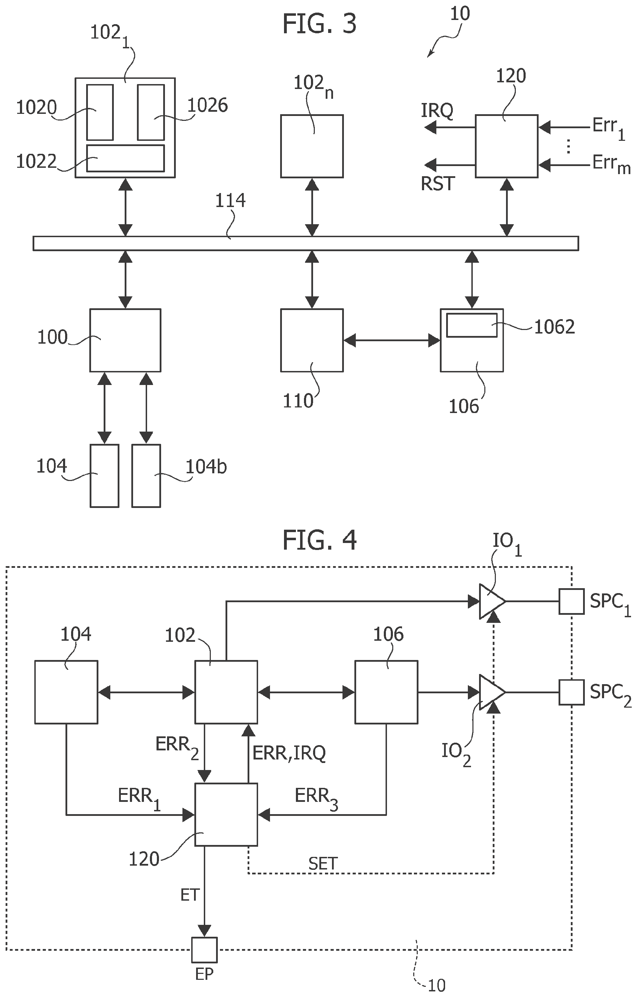

Figure 3 shows an example of a multi-core processing system 10. Specifically, in the example considered, the processing system 10 comprises a plurality of n processing cores 102₁...102ₙ connected to a (on-chip) communication system 114. For example, in the context of real-time control systems, the processing cores 102₁...102ₙ may be ARM Cortex^{®}-R52 cores. Generally, the communication system 114 may comprise one or more bus systems, e.g., based on the Advanced eXtensible Interface (AXI) bus architecture, and/or a Network-on-Chip (NoC).

For example, as shown at the example of the processing core 102₁, each processing core 102 may comprise a microprocessor 1020 and a communication interface 1022 configured to manage the communication between the microprocessor 1020 and the communication system 114. Typically, the interface 1022 is a master interface configured to forward a given (read or write) request from the microprocessor 1020 to the communication system 114, and forward an optional response from the communication system 114 to the microprocessor 1020. However, the communication interface 1022 may also comprise a slave interface. For example, in this way, a first microprocessor 1020 may send a request to a second microprocessor 1020 (via the communication interface 1022 of the first microprocessor, the communication system 114 and the communication interface 1022 of the second microprocessor).

Generally, each processing core 102₁...102ₙ may also comprise further local resources, such as one or more local memories 1026, usually identified as Tightly Coupled Memory (TCM).

As mentioned before, typically the processing cores 102₁...102ₙ are arranged to exchange data with a non-volatile memory 104 and/or a volatile memory 104b. In a multi-core processing system 10, often these memories are system memories, *i.e.,* shared for the processing cores 102₁...102ₙ. As mentioned before, each processing core 102₁...102ₙ may, however, comprise one or more additional local memories 1026.

For example, as shown in Figure 3, the processing system 10 may comprise one or more memory controllers 100 configured to connect at least one non-volatile memory 104 and at least one volatile memory 104b to the communication system 114. As mentioned before, one or more of the memories 104 and/or 104b may be integrated in the integrated circuit of the processing system 10 or connected externally to the integrated circuit.

As mentioned before, the processing system 10 may comprise one or more resources 106, such as one or more communication interfaces or co-processors (e.g., a cryptographic co-processor). The resources 106 are usually connected to the communication system 114 via a respective communication interface 1062. In general, the communication interface 1062 comprises at least a slave interface. For example, in this way, a processing core 102 may send a request to a resource 106 and the resource returns given data. Generally, one or more of the communication interfaces 1062 may also comprise a respective master interface. For example, such a master interface may be useful in case the resource has to start a communication in order to exchange data via (read and/or write) request with another circuit connected to the communication system 114, such as a resource 106 or a processing core 102. For example, for this purpose, the communication system 114 may indeed comprise an Advanced Microcontroller Bus Architecture (AMBA) High-performance Bus (AHB), and an Advanced Peripheral Bus (APB) used to connect the resources/peripherals 106 to the AMBA AHB bus.

Often such processing systems 10 comprise also one or more Direct Memory Access (DMA) controllers 110. For example, as shown in Figure 3, a DMA controller 110 may be used to directly exchange data with a memory, e.g., the memory 104b, based on requests received from a resource 106. For example, in this way, a communication interface IF may directly read data (via the DMA controller 110) from the memory 104b and transmit these data, without having to exchange further data with a processing unit 102. Generally, a DMA controller 110 may communicate with the memory or memories via the communication system 114 or via one or more dedicated communication channels.

In this respect, irrespective of the complexity of the processing system 10 (*e.g.,* with respect to the number of processing cores 102 and/or number and type of the resources 106), a typical processing system 10 comprises also a fault collection and error management circuit 120.

For example, European patent application n. EP 3 534 261 A1 discloses possible embodiments of a fault collection and error management circuit 120, which is incorporated herein by reference for this purpose.

Specifically, as shown in Figure 4, at least one of the circuits 102, 104 and 106 may generate one or more error signals ERR₁, ..., ERRₘ. For example, such error signals ERR may be generated by at least one of:
- a memory 104 supporting an error detection and optional correction function, which generates an error signal ERR₁ when the data read from the memory 104 contain errors and/or when data could not be written to the memory;
- a processing core 102 configured to generate an error signal ERR₂ in response to a hardware and/or software failure; and
- a communication interface configured to generate an error signal ERR₃, corresponding to a hard error signal indicative of a hardware failure and/or a soft error signal indicative of a data transmission error.

In the example considered, the various error signals ERR₁, ..., ERRₘ are provided to the fault collection and error management circuit 120. In response to the error signals ERR₁, ..., ERRₘ, the fault collection and error management circuit 120 may execute various operations.

For example, the fault collection and error management circuit 120 may be configured to generate at least one of:
- an interrupt signal IRQ provided to a processing core 102;
- a reset request signal RST provided to a reset management circuit of the processing system 10;
- a signal ET provided to a terminal EP of the processing system 10, *e.g.,* in order to signal the error to an external circuit; and
- a signal SET used to set the output level of one or more safety critical terminals SCP of the processing system 10.

Specifically, due to an error, the circuits of the processing system 10 may not operate correctly, possibly generating incorrect signals at the pins/pads of the processing system 10. Some of the pins/pads of the processing system 10a may thus be safety-critical pins/pad, *i.e.,* pins/pads which may generate critical situations when driven incorrectly. For example, in Figure 4 is shown schematically a first safety-critical pin SCP₁, which is driven by a processing core 102, and a second safety-critical pin SCP₂, which is driven by a resource/peripheral 106, such as a communication interface or a PWM half-bridge driver.

Generally, each input/output pin/pad of the processing system 10 has usually associated a respective driver circuit IO, which is configured to drive the respective pin/pad as a function of the signal received from the respective block, *e.g.,* the processing system 102 and the hardware resources 106. Generally, between the driver circuits IO and the blocks of the processing system 10a may also be arranged a dedicated logic, such as one or more multiplexers, permitting a configuration of the pin-mapping.

Accordingly, in line with the disclosure of document EP 3 534 261 A1, the driver circuit IO of a safety-critical pins/pads SCP may be configured to set the output level of the respective pin to a given safety state in response to a signal SET. The output level, such as a high-impedance state or a given logic level (high or low), may depend on the specific application needs. Preferably such a "safety state" is compliant to the ISO 26262 specification.

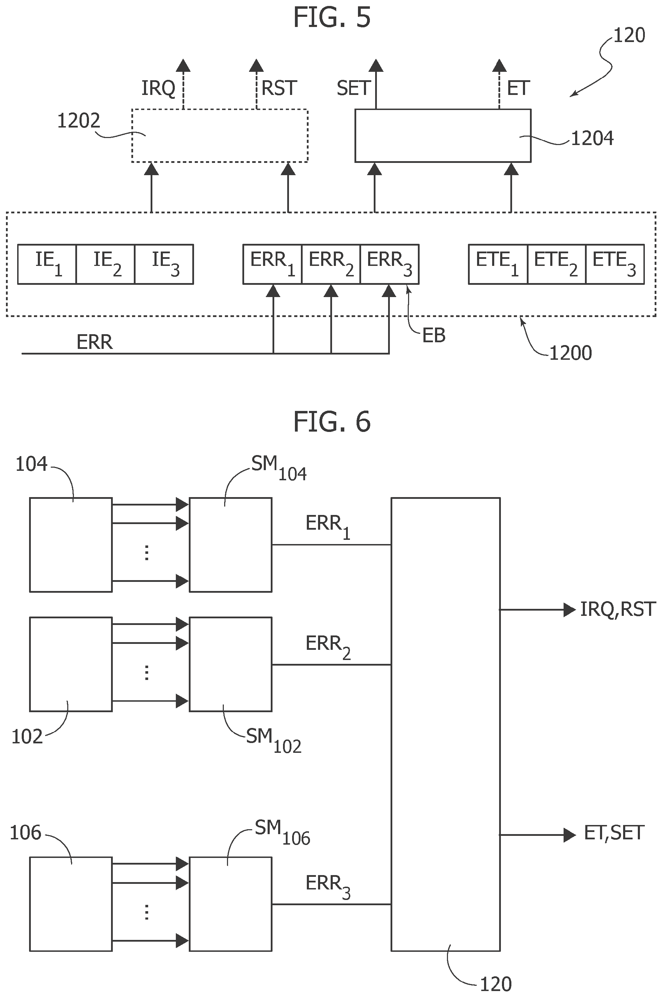

Figure 5 shows a possible implementation of the fault collection and error management circuit 120.

In the example considered, the fault collection and error management circuit 120 comprises a register 1200. Specifically, in the example considered, the register 1200 comprises one or more error bits EB for storing the value of the error signals ERR. For example, considering the exemplary case of three error signals ERR₁..ERR₃, the register 1200 may comprise a corresponding number of error bits EB.

In the example considered, the fault collection and error management circuit 120 comprises an internal reaction circuit 1202. Specifically, the internal reaction circuit 1202 may be configured to generate the interrupt signal IRQ and/or the reset request signal RST as a function of the content of the error bits EB of the register 1200. The error bits EB are purely optional and the external reaction circuit 1202 may generate the interrupt signal IRQ and/or the reset request signal RST also directly as a function of the error signal(s) ERR.

Similarly, the fault collection and error management circuit 120 comprises an external reaction circuit 1204. Specifically, the external reaction circuit 1204 may be configured to generate the error trigger signal ET and/or the signal SET as a function of the content of the error bits EB of the register 1200. Again, the error bits EB are purely optional and the external reaction circuit 1204 may generate the signal ET and/or the signal SET also directly as a function of the error signal(s) ERR.

In general, the behavior of the reaction circuits 1202 and/or 1204 may also be programmable, *e.g*., by setting one or more configuration bits in the register 1200. For example, in the example considered, the register 1200 comprises:
- a respective interrupt enable bit IE for each of the error signals ERR₁..ERR₃, *i.e.,* the interrupt signal IRQ is asserted when also the respective interrupt enable bit IE of an asserted error signal ERR is asserted;
- a respective error trigger enable bit ETE for each of the error signals ERR₁..ERR₃, *i.e.,* the error trigger signal ET is asserted when also the respective error trigger enable bit ETE of an asserted error signal ERR is asserted.

Similarly, the register 1200 may comprise respective reset enable bits for the reset request signal REQ and/or respective enable bits for the safety signal SET.

In order to simplify the data exchange between the processing unit 102 and the registers 1200, the register 1200 may be directly addressable by the processing unit 102, which is schematically shown in Figure 3, where the fault collection and error management circuit 120 is connected to the communication system 114.

Typically, as shown in Figure 6, the hardware error signals ERR are generated by dedicated safety monitor circuits SM. For example, such safety monitor circuits may comprise combinational and/or sequential logic circuits, which monitor the operation of a given circuit. Generally, such safety monitor circuits SM may also comprise analog components, *e.g*., in order to detect an out-of-range condition for an analog signal, such as an internal supply voltage or a signal indicative of the operating temperature of the processing system or a specific circuit of the processing system.

For example, Figure 6 shows a safety monitor circuit SM₁₀₄ configured to monitor one or more signals of the memory 104, a safety monitor circuit SM₁₀₂ configured to monitor one or more signals of a processing core 102 and a safety monitor circuit SM₁₀₆ configured to monitor one or more signals of a resource/peripheral 106. Generally, the safety monitor circuit may also be integrated in the respective circuit.

Accordingly, typically each safety monitor circuit SM monitors one or more signals generated by and/or provided to the associated circuit, and determines whether the behavior of the signal(s) is normal or indicates an error. In general, the operations performed by a given safety monitor circuit SM depend on the associated circuit and may include, *e.g.*:
- a combinational analysis, *e.g*., by combining the signals of the associated circuit in order to determine whether the signal levels are congruent;
- a sequential analysis, e.g., by comparing the time evolution of one or more signals with one or more reference signals;
- an analysis of one or more analog signals, *e.g*., by comparing the value of an analog signal with one or more reference values; or
- a combination of the above analyses in order to implement a more complex abnormal behavior analysis.

Accordingly, in response to determining an abnormal behavior, the safety monitor circuit SM may assert a respective error signal ERR, which signals the error to the fault collection system 120.

A challenging situation arises when the processing system 10 is started or otherwise reset and the initial initialization/boot software is executed because, at this stage, the safety hardware and software infrastructure may not yet be configured and therefore unable to detect and address potential malfunctions. This can lead to an incorrect initialization phase, posing a risk of compromising the proper execution of the application. Consequently, solutions are needed to verify the integrity of the software initialization execution flow.

For example, in prior art solutions, the initialization software, also referred to as boot software or boot firmware, is typically executed by a lockstep CPU, ensuring that any CPU malfunctions are detected. Specifically, a lockstep CPU is a fault detectable, and thus safety compliant, computing architecture in which two or more microprocessors execute the same instructions simultaneously to ensure detectability of faults. By maintaining synchronized execution, a dedicated logic unit continuously compares the outputs of both processors. If a discrepancy arises, the system identifies a fault and triggers an error signal.

The primary advantage of a lockstep CPU lies in its ability to provide high fault detection accuracy, making it suitable for safety-critical environments. By ensuring that execution errors are immediately identified, it enhances the reliability of the processing system 10 while avoiding the need for fully redundant hardware. However, this approach comes with drawbacks, including increased hardware costs due to the requirement of additional processing units, higher power consumption resulting from parallel execution, and a performance overhead caused by synchronization and output comparison.

Moreover, unless a reset reaction is specifically programmed for a lockstep fault, the boot firmware may still execute the initialization code incorrectly. Establishing an effective software strategy to identify such failures can be highly complex, making it challenging to prevent them from escalating into safety-critical issues. Furthermore, when the boot firmware is designed to run on a non-lockstep CPU, using a duplicated CPU solely for initialization may not be an optimal solution in terms of hardware area efficiency and/or for implementing a software-based synchronization between the CPUs.

Accordingly, solutions have been proposed for verifying directly in hardware the correct execution of software/firmware. For example, United States Patent Publication no. US 11,698,969 B1 discloses solutions, wherein an additional firmware verification circuit verifies the execution of the firmware by computing a signature for the software instructions executed by the microprocessor, which essentially permits to verify that signature of the instructions executed. However, such a solution is rather inflexible and/or inefficient, because software routines comprising if/else statements may be hardly verified, e.g., because different signatures would be calculated for different branches. Further solutions are disclosed in United States Patent Application Publication no. US 2023/0409341 A1 or Ramtilak Vemu et al., "CEDA: Control-Flow Error Detection Using Assertions", IEEE TRANSACTIONS ON COMPUTERS, IEEE, USA, vol. 60, no. 9, 1 September 2011, pages 1233-1245, XP011337657, ISSN:0018-9340, DOI: 10.1109/TC.2011.101.

### Summary

In view of the above, it is an objective of various embodiments of the present disclosure to provide improved solutions for monitoring the operation of a microprocessor, in particular during the execution of an initialization/boot software, which ensure a reliable detection of software execution errors, and which permit to avoid the use of a lockstep CPU.

According to one or more embodiments, one or more of the above objectives is achieved by means of a processing system having the features specifically set forth in the claims that follow. Embodiments moreover concern a related device and method.

The scope of protection is defined in the enclosed claims, which are an integral part of the technical teaching of the disclosure provided herein.

As mentioned before, various embodiments of the present disclosure relate to a processing system, e.g., integrated in an integrated circuit, such as a microcontroller. Specifically, in various embodiments, the processing system comprises a microprocessor configured to execute a firmware comprising software instructions, and the processing system is configured to monitor a plurality of tracking points. For this purpose, in various embodiments, the processing system comprises also a non-volatile memory and a tracking point checker circuit. Specifically, the non-volatile memory is configured to store a reference tracking point bit pattern comprising for each tracking point respective one or more reference bits. Moreover, in various embodiments, the tracking point checker circuit comprises a set of registers, a register interface and a comparison circuit.

Specifically, in various embodiments, a dedicated register is configured to store a tracking point bit pattern comprising for each tracking point respective one or more bits. For example, in various embodiments, the reference tracking point bit pattern comprises for each tracking point a single reference bit and the tracking point bit pattern comprising comprises for each tracking point a single bit.

The register interface is configured to receive a set request from the microprocessor, wherein the set request indicates that a given tracking point has been reached. In response to receiving a set request, the register interface asserts at least one bit of the one or more bits associated with the tracking point indicated in the set request.

In various embodiments, the comparison circuit is configured to compare the respective one or more bits of the tracking point bit pattern associated with at least one tracking point with the respective one or more reference bits of the reference tracking point bit pattern. In order to implement the comparison operation, the tracking point checker circuit may comprise a further register configured to store the reference tracking point bit pattern, and the processing system may comprise a configuration circuit configured to, in response to a reset request of the processing system, transfer the reference tracking point bit pattern from the non-volatile memory to the further register. In response to determining that the respective one or more bits of the tracking point bit pattern associated with at least one tracking point do not correspond to the respective one or more reference bits of the reference tracking point bit pattern, the comparison circuit asserts a tracking point error signal.

Accordingly, in various embodiments, the firmware may comprise software instructions for sending a plurality of set requests for different tracking points to the register interface of the tracking point checker circuit, and the comparison circuit is configured to compare at least part of the tracking point bit pattern with the respective bits of the reference tracking point bit pattern.

For example, in various embodiments, the tracking point checker circuit is configured to receive via the register interface a stop request from the microprocessor and, in response to receiving the stop request, determine via the comparison circuit whether the (complete) tracking point bit pattern corresponds to the reference tracking point bit pattern.

Additionally or alternatively, the tracking point checker circuit may be configured to, in response to receiving a set request, compare via the comparison circuit the one or more bits of the tracking point bit pattern associated with the tracking point indicated in the set request with the respective one or more reference bits of the reference tracking point bit pattern. In this case, in response to receiving the set request, the tracking point checker circuit may also compare via the comparison circuit a given number of least significant bits of the tracking point bit pattern with the respective least significant bits of the reference tracking point bit pattern, wherein the number of least significant bits is determined as a function of the tracking point indicated in the set request.

In various embodiments, the processing system comprises also a timer circuit configured to monitor the execution time of the firmware and to assert a timeout error signal in response to determining that a predetermined timeout period has elapsed. In various embodiments, the timer circuit is integrated in the tracking point checker circuit and the register interface is configured to receive a start request or stop request, and to start or stop the timer circuit in response to the start request or stop request, respectively, and/or receive a request for configuring the predetermined timeout period.

In various embodiments, the tracking point checker circuit comprises an error management circuit configured to receive the tracking point error signal and optionally the timeout error signal. In response to determining that the tracking point error signal and/or optionally the timeout error signal is asserted, the error management circuit asserts at least one of: an error signal provided to a fault collection and error management circuit of the processing system, at least one internal reaction signal, or at least one external reaction signal. In various embodiments, the error management circuit is configurable via the register interface.

In various embodiments, the non-volatile memory is configured to store a plurality of reference tracking point bit patterns, and the tracking point checker circuit is configured to provide to the comparison circuit a reference pattern selected via the register interface or via a reset type signal indicative of a functional or destructive reset.

### Brief description of the figures

Embodiments of the present disclosure will now be described with reference to the annexed drawings, which are provided purely by way of non-limiting example and in which:
- Figure 1 shows an example of an electronic system comprising a plurality of processing systems;
- Figures 2 and 3 show examples of processing systems;
- Figure 4 shows an example of a processing system comprising a fault collection and error management circuit;
- Figure 5 shows an example of the fault collection and error management circuit of Figure 4;
- Figure 6 shows an example of the connection between a plurality of safety monitor circuits and the fault collection and error management circuit;
- Figure 7 shows an embodiment of a processing system comprising a tracking point checker circuit;
- Figure 8 shows an embodiment of the tracking point checker circuit of Figure 7;
- Figure 9 shows a further embodiment of the tracking point checker circuit of Figure 7;
- Figure 10 shows an embodiment of control and status data adapted to be used with the tracking point checker circuit; and
- Figure 11 shows an embodiment of a method of operating a processing system according to the present disclosure.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The references provided herein are for convenience only and do not interpret the scope or meaning of the embodiments.

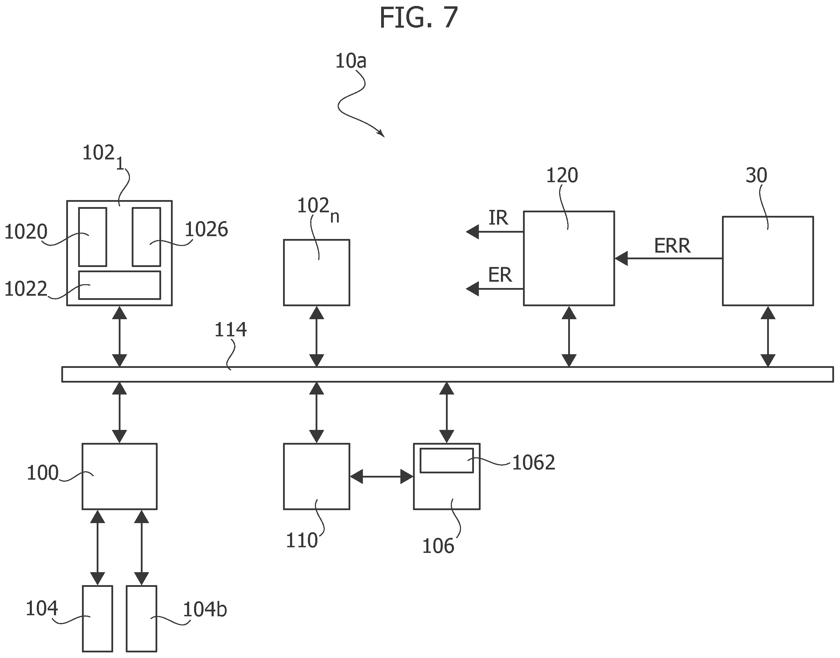

In the following Figures 7 to 11 parts, elements or components which have already been described with reference to Figures 1 to 6 are denoted by the same references previously used in such Figure; the description of such previously described elements will not be repeated in the following in order not to overburden the present detailed description.

As mentioned before various embodiments of the present disclosure relate to solutions for monitoring the operation of a microprocessor executing software instructions, such as a boot software.

Figure 7 shows an embodiment of a processing system 10a according to the present disclosure. Specifically, the processing system 10a comprises one or more processing cores 102, such as processing cores 102₁ to 102ₙ. For example, each processing core 102 may comprise one or more microprocessors 1020. The processing system 10a comprises also one or more memory controllers 100 configured to interface one or more internal and/or external non-volatile memories 104 and/or volatile memories 104b. The one or more memory controllers 100 are connected to the one or more processing cores 102 via a suitable communication system 114, such as one or more system buses and/or a NoC. For example, a non-volatile memory 104 may be configured to store the software instructions to be executed by the microprocessor(s) 1020.

In various embodiments, the processing system 10a may also comprise further circuits, such as one or more resources/peripherals 106 and/or general-purpose DMA controllers 110, which are connected to the communication system 114. Reference is made to the description of the Figures 1 to 3 for possible embodiments of the circuits 100 to 114, which applies in its entirety.

In various embodiments, the processing system 10a may also comprise a fault collection and error management circuit 120 and one or more safety monitor circuits SM. For example, each safety monitor circuit SM may be configured to generate a respective error signal by monitoring the operation of a respective circuit, such as the circuits 100 to 114. Conversely, the fault collection and error management circuit 120 is configured to generate one or more internal reaction signals IR, such as an interrupt signal IRQ and/or a reset request signal RST, and/or one or more external reaction signals ER, such as a signal ET provided to a terminal EP of the processing system 10a and/or a signal SET used to set the output level of one or more safety critical terminals SCP of the processing system 10a. In various embodiments, the mapping of the error signals ERR to the internal reaction signals IR and/or external reaction signals ER may be programmable. Reference is made to the description of the Figures 4 to 6 for possible embodiments of the circuits 120 and SM, which applies in its entirety.

In various embodiments, the processing system 10a comprises a circuit 30 arranged to monitor the correct execution of a firmware, preferably a boot firmware. The circuit 30 will also be identified as tracking point checker or verification circuit in the following.

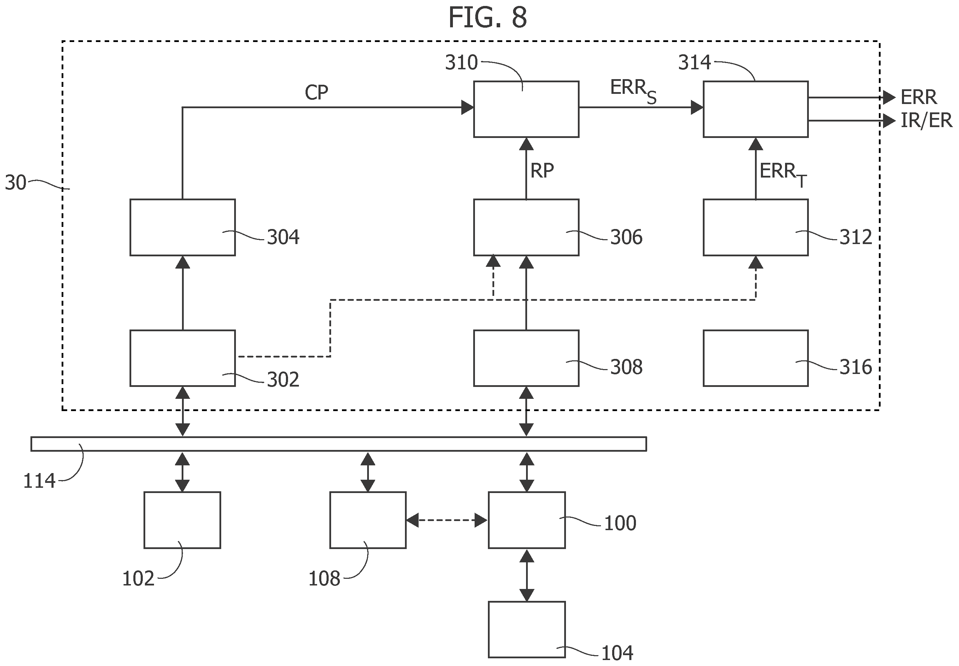

Figure 8 shows an embodiment of the tracking point checker circuit 30 according to the present disclosure. Specifically, in the embodiment considered, the tracking point checker circuit 30 comprises a register 304 and a register interface 302. Specifically, the register interface 302 is configured to permit a programming of the content of the register 302 via software instructions executed by a processing core 102, in particular a respective microprocessor 1020. For example, for this purpose the register interface 302 may be a slave interface connected to the communication system 114. In this case, the slave interface may have associated a given address sub-range of the communication system 114, whereby read or write requests including an address of the address sub-range are forwarded from the processing core 102 (or another master interface of the communication system 114) to the register interface 302. In various embodiments, the register interface 302 may also belong (at least in part) to a peripheral bridge.

Accordingly, by receiving write requests from a processing core 102, the register interface 302 writes/updates the content of the register 304. Specifically, as will be described in greater detail in the following, the (e.g., boot) firmware executed by the processing core 102 is configured to write one or more bits of the register 304 at given instants of the firmware. For example, for this purpose, the firmware may comprise one or more software instructions in order to write one or more given bits/flags of the register 304. Accordingly, when the microprocessor 1020 executes correctly the firmware, the register 304 should store a given pattern of bits.

Specifically, compared to the solutions disclosed in document US 11,698,969 B1, the content of the register 304 is not updated automatically by directly monitoring the software instructions executed by the processing core 102, but the firmware itself comprises at given points within the firmware instructions in order to update the content of the register 304. For example, such update instructions may be provided after given subroutines, or generally after a set or group of software instructions. For example, this permits that a software developer may choose to insert the update instructions only once an if/else statement has been executed, whereby the same signature results irrespective of which if/else branch has been selected, or to insert a respective update instruction in each if/else branch, whereby a different signature is obtained for each if/else branch. For example, the former solution may be useful when it is expected that the processing core 102 may execute different branches also in case of a correctly operating processing system.

Accordingly, in this way the pattern of bits stored to the register 304 may be used to indicate whether the firmware has executed given subroutines (or groups of instructions), thereby indicating whether the firmware execution has reached given "tracking points."

Accordingly, in the embodiment considered, the tracking point checker circuit 30 comprises a further register 306 configured to store a reference signature, and a comparator 310 configured to compare the data stored to the register 304, i.e., the pattern CP of tracking points of the current firmware execution, with the data stored to the register 306, i.e., the reference pattern RP. As will be described in greater detail in the following, the comparison circuit 310 may be configured to compare the complete pattern, e.g., at the end of the firmware execution, or just a part of the pattern, e.g., while the firmware is still executed. Accordingly, in response to determining that the (subset of) bits of the register 304 do not correspond to the corresponding bits of the register 306, the comparison circuit 310 may assert an error signal ERR_{S}, e.g., indicating an abnormal execution of the firmware.

In various embodiments, the content of the register 306 may be programmed via the register interface 302 (or a further register interface). For example, in this case, the content of the register 306 may be programmed via software instructions executed by the processing core 102. For example, the firmware executed by the processing core 102 may comprise at the beginning instructions for writing the register 306.

Additionally or alternatively, the processing system 10a may comprise a hardware configuration circuit 108 configured to read configuration data from a non-volatile memory 104 of the processing system 10a. For example, the configuration circuit 108 may be configured to, in response to a reset of the processing system 10a, read the configuration data from the non-volatile memory 104 and distribute the configuration data within the processing system 10a, e.g., by sending write requests via the communication system 114 or a dedicated communication system. Accordingly, in this way, the reference pattern RP to be stored to the register 306 may be included in the configuration data stored to the non-volatile memory 104. Accordingly, in various embodiments, the interface 306 may be a slave interface configured to receive the reference pattern RP from a processing core 102 and/or the configuration circuit 108.

Additionally or alternatively, the tracking point checker circuit 30 may comprise an integrated configuration circuit 308, e.g., implementing a DMA (read) interface. Specifically, in various embodiments, the operation of the configuration circuit 308 is controlled by a state control circuit 316. Specifically, in response to a reset request of the tracking point checker circuit 30 (and prior to starting the software execution), e.g., in response to a power-on reset, the state control circuit 316 signals, e.g., via one or more control signals, a read request indicating that the configuration circuit 308 should read the reference pattern RP from the non-volatile memory 104. Accordingly, in response to the read request, the configuration circuit 308 reads the reference pattern RP from the non-volatile memory 104 and stores the reference pattern RP to the register 306. For example, the reference pattern RP may be stored to predetermined memory locations in the non-volatile memory 104. In various embodiments, the integrated configuration circuit 308 may directly communicate with the memory controller 100 interfacing the non-volatile memory 104 or the configuration circuit 308 may be a master interface of the communication system 114 configured to read the reference pattern RP from the non-volatile memory 104 by sending read requests to the communication system 114.

In various embodiments, the reference pattern RP value may be stored to one or more memory locations of the non-volatile memory 104. Accordingly, the configuration circuit 108 or 308 may autonomously generate the read requests in order to read the reference pattern RP sequentially from the non-volatile 104, e.g., by sequentially increases an address signal from an initial value indicating the first memory location in the non-volatile memory 104 used to store the reference pattern RP.

Accordingly, in response to given events the comparison circuit 310 compares (at least part) of the bits of the pattern CP stored to the register 304 with respective bits of the reference pattern RP.

For example, in various embodiments, once a given bit is asserted in the register 304, the comparison circuit 310 is configured to determine whether the respective bit of the reference pattern RP is asserted. For example, once the bit 4 of the pattern CP is asserted, the comparison circuit 310 may verify whether also the bit 4 of the pattern RP is asserted. For example, for this purpose, when receiving a write request, the register interface 302 may also signal the write request to the comparison circuit 310. Accordingly, in this case, in response to determining that the respective bit of the reference pattern RP is de-asserted, the comparison circuit 310 may assert the error signal ERRs.

Additionally, in various embodiments, the comparison circuit 310 may also be configured to compare all lower bits of pattern CP with the respective bits of the reference pattern RP. For example, once the bit 4 of the pattern CP is asserted, the comparison circuit 310 may also verify whether the values of the bits 0 to 3 of the pattern CP correspond to the values of the bits 0 to 3 of the reference pattern RP. For example, once a given bit at a given bit position is asserted in the register 304, the comparison circuit 310 may be configured to determine whether the values of the bits at the lower bit positions with respect to the given bit position of the pattern CP correspond to the values of the respective bits of the reference pattern RP. Accordingly, in this case, in response to determining that the values of the bits do not correspond, the comparison circuit 310 may assert the error signal ERRs.

Additionally or alternatively, the processing core 102 may explicitly signal the execution of the firmware has been completed, e.g., by sending a given request to the register interface 302. Accordingly, in the case, in response to receiving the request indicating the completion of the firmware execution, the comparison circuit 310 may compare the (complete) pattern CP with the reference pattern RP. Accordingly, in this case, in response to determining that the patterns CP and RP do not correspond, the comparison circuit 310 may assert the error signal ERRs.

In various embodiments, the solutions may also be combined. For example, the completion of the execution of the signal may be signaled by writing a given or predetermined bit of the pattern CP, e.g., the most significant bit of the register 304. Accordingly, in this case, once the respective bit is written, the comparison circuit 310 may automatically compare the bits of the pattern CP with the reference pattern RP, and assert the error signal ERR_{S} in response to determining that the patterns CP and RP do not correspond.

Accordingly, in various embodiments, the tracking point error signal ERR_{S} may be provided to a fault collection and error management circuit 120 of the processing system 10a, which in turn may generate an internal reaction signal IR or an external reaction signal ER. Reference is made to the description of Figures 4 to 6 for this purpose. However, as will be described in greater detail in the following, the tracking point checker circuit 30 may also comprise an internal error management circuit 314 configured to generate an internal reaction signal IR or an external reaction signal ER. In fact, this ensures the routing of the error signal ERR_{S} independently from the configuration of the fault collection and error management circuit 120, which during the boot phase may not yet be configured fully.

In various embodiments, the processing system 10a may also comprise a (watchdog) timer circuit 312 configured to assert a timeout error signal ERR_{T} in response to determining that a maximum time has been reached. In fact, in case the firmware execution is blocked, the processing core 102 will not proceed to a next tracking point, whereby the pattern CP is not update. Accordingly, in order to detect this type of malfunction, the timer circuit 312 may be used to monitor a maximum time within which the firmware execution has to be completed.

Similar to the configuration circuits 108 and 308, also the timer circuit 312 may be internal or external with respect to the tracking point checker circuit 30. For example, in various embodiments, the configuration circuit 308 and/or the timer circuit 312 are integrated within the tracking point checker circuit 30, because in this way, the tracking point checker circuit 30 may be provided as an additional hardware module (IP core), which optionally may be added to a processing system.

Accordingly, in various embodiments, the timeout error signal ERR_{T} may be provided to the fault collection and error management circuit 120 of the processing system 10a. Conversely, Figure 8 shows an embodiment, wherein the tracking point error signal ERR_{S} and the timeout error signal ERR_{T} are provided to the error management circuit 314 integrated in the tracking point checker circuit 30, wherein the error management circuit 314 is configured to assert a (combined) error signal ERR in response to determining that at least one of the error signals ERR_{S} and ERR_{T} is asserted. For example, for this purpose, the error combination circuit 314 may comprise a logic OR gate.

As mentioned before, in various embodiments, the error combination circuit 314 may also implement an integrated fault collection and error management circuit. Specifically, in this case, the error combination circuit 314 may be configured to generate (in addition to or as alternative to the combined error signal ERR) an internal reaction signal IR and/or an external reaction signal ER as a function of the error signal ERR_{S}, the error signal ERR_{T}, and/or the error signal ERR.

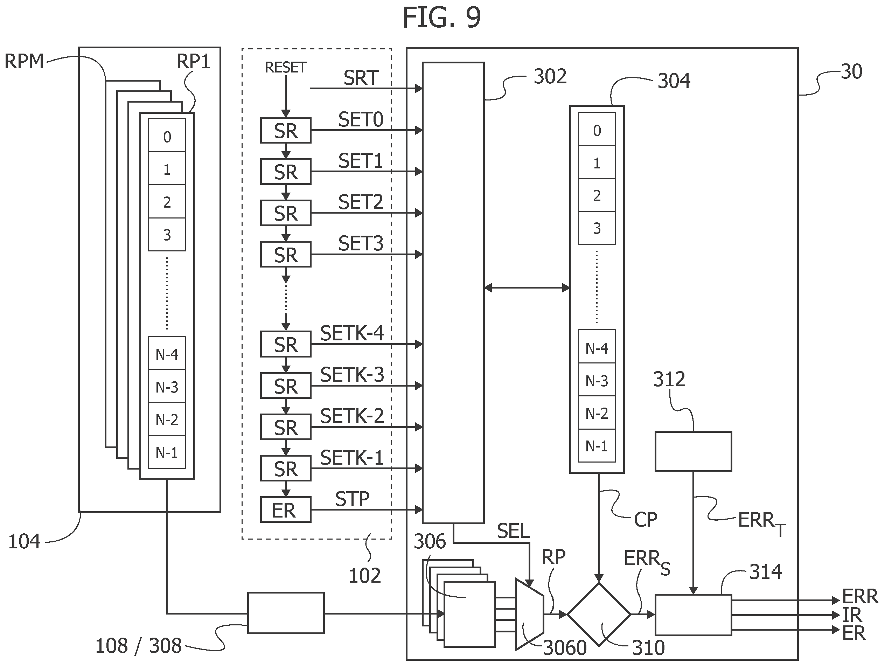

Figure 9 shows a further embodiment of a processing system 10a in accordance with the present disclosure. Specifically, in the embodiment considered, the tracking point checker circuit 30 comprises one or more registers 306 configured to store a plurality M of reference patterns, indicated as reference patterns RP1 to RPM, and a selection circuit 3060 configured to select one of the reference patterns provided by the register(s) 306 as a function of a selection signal SEL. Accordingly, in the embodiment considered, the selection circuit 3060 provides a selected reference pattern, corresponding to the reference pattern RP discussed in the foregoing, to the comparison circuit 310.

In the embodiment considered, the non-volatile memory 104 is configured to store the reference patterns RP1 to RPM, and the hardware configuration circuit 108 or the integrated configuration circuit 308 is configured to transfer the reference patterns RP1 to RPM from the non-volatile memory 104 to the register(s) 306. In general, it is not necessary that indeed all reference patterns RP1 to RPM are programmed.

The embodiment shown in Figure 9 supports thus a plurality of reference patterns. In fact, the inventor has observed that a boot firmware may execute different subroutines or a different set of sub-routines based on whether a destructive or just a functional reset is performed. Specifically, the expression functional reset usually refers to a reset operation that selectively reinitializes one or more functional units or subsystems of a processing system 10a, e.g., a microcontroller, without causing a loss of the entire operational context. A functional reset typically preserves the contents of volatile memory, such as RAM and caches, and may leave certain registers unaffected, thereby allowing for a partial recovery or reconfiguration of the system while maintaining ongoing computational states or data. Conversely, the expression destructive reset refers to a comprehensive reset operation that causes the processing system 10a to return to its initial state, equivalent to a power-on reset. A destructive reset typically clears all volatile memory and internal registers, thereby resulting in the loss of all operational context and requiring a complete reinitialization and reboot of the system.

Accordingly, in various embodiments, the processing system 10a is configured to determine whether the boot process has been started in response to a functional or destructive reset and generate the selection signal SEL accordingly. In this respect, in the embodiment considered, the selection signal SEL is provided by the register interface 302. Accordingly, in this case, the processing core 102 may send a write request to set the selection signal SEL.

Accordingly, in the embodiment considered, the processing core 102 may execute an initialization procedure comprising software instructions in order to setup (and if required start) the operation of the tracking point checker circuit 30, as schematically shown via one or more requests STR. For example, the one or more requests may set the selection signal SEL, and configure and start the timer circuit 312.

Next, the processing core 102 may execute a given number K of software routines SR, wherein each software routine SR comprises software instructions for asserting a given flag/bit of the pattern CP stored to the register 304, as schematically shown via requests SET0 to SETK-1, wherein the number K corresponds to or is smaller than the number N of bits of the register 304.

Thus, in the embodiment considered, each bit of the register 302 is associated univocally with a given tracking point. However, in general, the register 302 may be used to indicate N tracking points, wherein each tracking points may have associated one or more bits. For example, in this case, the set request SET may indicate (the position or number of) a given the tracking point to be programmed and a bit pattern to be written to the bits associated with the given tracking point. In this respect, it is not necessary that all bits of the bit pattern associated with a given tracking point are asserted, but it is sufficient that at least one bit is asserted and the reference pattern RP stores the same bit pattern for the given tracking point.

In various embodiments, at the end of the boot firmware, the processing core 102 may then execute a finalization procedure comprising software instructions in order to stop the operation of the tracking point checker circuit 30, as schematically shown via one or more requests STP. For example, in response to receiving the request STP, the register interface may instruct the comparison circuit 310 to compare the pattern CP with the reference pattern RP and/or stop the timer circuit 312.

Accordingly, also in this case, the error combination circuit 314 may generate the error signal ERR, one or more internal reaction signals IR and/or one or more external reaction signals ER as a function of the signals ERR_{S} and ERR_{T}.

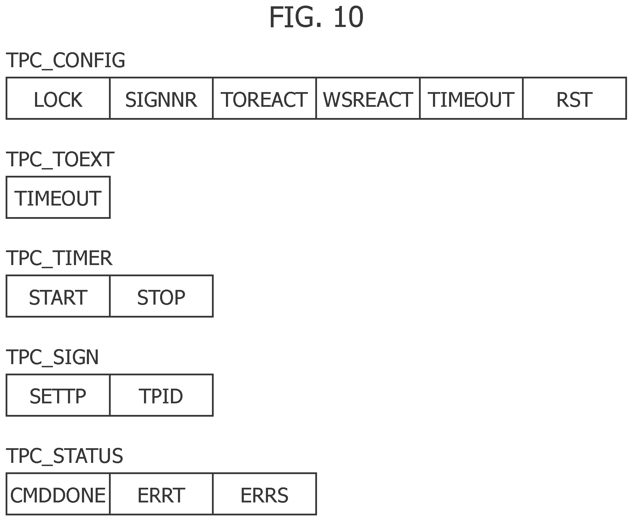

Figure 10 shows an embodiment of the field being addressable via the register interface 302. In various embodiments, the various bits and fields described in the following may also be organized differently.

Specifically, in the embodiment considered, the register interface 302 manages one or more of the following fields: LOCK, SIGNNR, TOREACT, WSREACT, TIMEOUT, RST. For example, these fields are stored to a register TPC_CONFIG used to configure the tracking point checker circuit 30.

In various embodiments, the bit LOCK indicates whether the register TPC_CONFIG should be locked. Accordingly, in various embodiments, in response to determining that the bit LOCK is asserted, the register interface 302 is configured to inhibit further write requests to the register TPC_CONFIG.

In various embodiments, the field SIGNNR is used to select which reference signature RP1 to RPM shall be used for the comparison at the comparison circuit 310. For example, when supporting M = 4 signatures, the field SIGNNR may have 2 bits. Accordingly, in various embodiments, the register interface 302 is configured to generate the selection signal SEL as a function of the field SIGNNR in order to select the respective reference patterns as signal RP provided to the comparison circuit 310. As mentioned before, the presence of multiple signatures may be advantageous because, upon execution of the boot software, the processing system 10a may be in different initial states, for example, following a complete power-off event or a functional reset triggered during a previous runtime session. Accordingly, the behavior of the boot software may vary depending on the type of reset that occurred; accordingly, the appropriate signature should be selected to ensure correct initialization and execution flow. This field is purely optional, because the processing system 10a could also support just a single reference signature RP.

In various embodiments, the field TOREACT is used to configure the reaction of the error combination circuit 314 in response to the signal ERR_{T} provided by the timer circuit 312. For example, in various embodiments, the default reaction may be a reset request signal RST, which is connected to a reset management circuit of the processing system 10a (not shown in the Figures). However, the error combination circuit 314 may also generate further signals, such as an error signal ERR provided to the fault collection and error management circuit 120 of the processing system 10a, one or more external reaction signals ER and/or one or more further internal reaction signals IR, such as an interrupt or exception for the processing core 102 executing the boot firmware. Also, this field is purely optional, because the error combination circuit 314 could not be programmable and provide one or more predetermined signals.

In various embodiments, the field WSREACT is used to configure reaction of the error combination circuit 314 in response to the signal ERR_{S} provided by the comparison circuit 310. For example, in various embodiments, the default reaction may be a reset request signal RST, which is connected to a reset management circuit of the processing system 10a (not shown in the Figures). However, the error combination circuit 314 may also generate further signals, such as an error signal ERR provided to the fault collection and error management circuit 120 of the processing system 10a, one or more external reaction signals ER and/or one or more further internal reaction signals IR, such as an interrupt or exception for the processing core 102 executing the boot firmware. Also, this field is purely optional, because the error combination circuit 314 could not be programmable and provide one or more predetermined signals.

In various embodiments, the bit RST is used to reset the tracking point checker circuit 30. In various embodiments, in addition or as alternative to the bit RST, the tracking point checker circuit 30 may be reset via a dedicated reset signal, e.g., received from the reset management circuit of the processing system 10a.

In various embodiments, the field TIMEOUT, e.g., having 27 bits, is used to set the timeout value for the timer circuit 312. For example, in case of clock signal having 40MHz (25ns period), the maximum timeout may be about 268 mSec (milliseconds), which is more than enough for the execution of usual boot firmware, which usually should have a maximum execution time between 50 and 100 mSec. Also this field is purely optional, because a separate watchdog timer could be used.

In case the field TIMEOUT of the register TPC_CONFIG is insufficient to specify a sufficient timeout condition for the timer 312, in various embodiments, the register interface 302 may support a higher number of bits for specifying the timeout of the timer circuit 312. For example, this is shown via a register TCP_TOEXT, which may comprise additional bits for the field TIMEOUT.

In various embodiments, the register interface 302 manages also bits START and STOP for starting and stopping, respectively, the timer circuit 312. In general, these bits may also be combined in a single timer enable bit, which indicates whether the timer circuit 312 is started or stopped. However, the use of a dedicated stop bit STOP has the advantage that this bit may also trigger the comparison operation of the comparison circuit 310, i.e., in response to writing the bit STOP, the comparison circuit 310 is configured to compare the pattern RP stored to the register 304 with the reference pattern RP. For example, in the embodiment considered, the bits START and STOP are addressable via a register TPC_TIMER.

In various embodiments, the register interface 302 comprises one or more fields for asserting a bit of the register 304. For example, the register interface 302 may receive a write request to a given address (associated with the register 304) and assert all bits of the register 304 for which a respective bit of the write request is set to "1 "/high. For example, in this way also a plurality of bits of the register 304 may be asserted with the same write request. Conversely, in the embodiment considered, the register interface 302 manages a field TPID, which indicates the position of the tracking point of the register 304 to be set, e.g., the bit position of a given bit to be asserted when each tracking point has associated a respective bit. For example, assuming that the register 304 comprises N tracking points, the field TPID may have log₂N bits, e.g., five bits for N = 32 bits. Optionally, the register interface 302 may also manage a field SETTP used to indicate explicitly (i.e., when the bit SETTP is asserted) that the one or more bits associated with a tracking point should be set to given value, e.g., asserted, wherein the respective tracking point is indicated via the field TPID. For example, in the embodiment considered, the fields SETTP and TPID are addressable via a register TCP_SIGN.

In various embodiments, the register interface 302 may also provide status information relating to the operation of the tracking point checker circuit 30. For example, in the embodiment considered, the respective fields are addressable via a register TCP_STATUS.

For example, a bit ERRT may provide the value of the timeout error signal ERR_{T} provided by the timer circuit 312. Similarly, a bit ERRS may provide the value of the tracking point error signal ERR_{S} provided by the comparison circuit 310.

In various embodiments, a bit CMDONE may indicate whether the register interface 302 already manages a write request. The use of this register may be advantageous in case the clock frequency of the processing core 102 is significantly higher than the frequency of the clock signal used by the tracking point checker circuit 30.

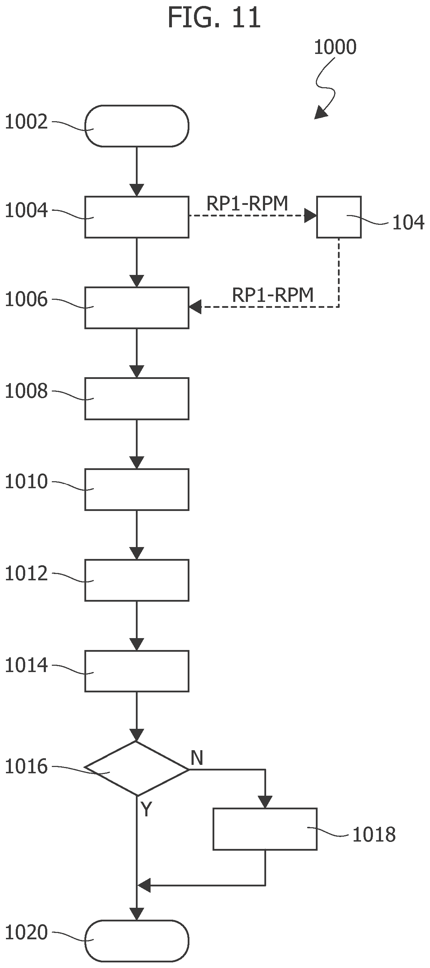

With respect to Figure 11 will now be described a method 100 of operating a processing system 10a according to the present disclosure.

After a start step 1002, one or more reference patterns are stored at a step 1004 to the non-volatile memory 104. As mentioned before, each reference pattern corresponds to an expected tracking signature for the firmware executed by the processing core, preferably a boot firmware. Specifically, in various embodiments, each signature value reflects the number and positions of the tracking points expected to be reached during the execution of the boot firmware. In this respect, a given boot firmware may also generate different patterns based on whether given subroutines SR are executed or not, which may depend, e.g., on the reset type. Thus, in various embodiments, the processing system 10a may support up to M reference patterns, i.e., reference patterns RP1 to RPM. In general, it is not required that indeed all supported reference patterns are programmed, e.g., because the firmware may always generate the same expected reference pattern.

Accordingly, once knowing the expected tracking signature(s), these signatures/patterns may be stored at the step 1004 to the non-volatile memory 104. In general, any suitable solution may be used for programming the reference pattern(s). For example, the reference patterns may be stored to the non-volatile memory 104 when programming the boot firmware, or via a separate programming operation.

Next, the processing system 10a is switched on at a step 1006, whereby a (destructive) reset of the processing system 10a is performed. In response to the reset of the processing system 10a, the hardware configuration circuit 108 and/or the integrated configuration circuit 308 transfers the one or more reference patterns RP1 to RPM from the non-volatile memory 104 to the register 306. In this respect, the register 306 may be implemented with any suitable memory, e.g., via flip-flops or latches. The step 1006 may similarly be started in response to a functional reset.

Moreover, in response to the reset, at a step 1008, the processing system 10a starts a processing core 102, in particular a respective microprocessor 1020, whereby the started microprocessor 1020 executes a firmware, preferably the boot firmware. For example, for this purpose, as *per se* well-known in the art, in response to a reset request, a reset management circuit of the processing system 10a may manage various phases, such as:
- a reset phase, wherein various circuits of the processing system 10a are reset,
- an optional configuration phase, wherein one or more circuits load configuration data from a non-volatile memory, such as the configuration circuit 108 and/or 308;
- an optional Built-in Self-Test (BIST) phase, wherein one or more diagnostic operations are executed; and
- a software-runtime phase, wherein at least one microprocessor 1020 is started, e.g., a microprocessor 1020 used to execute a boot firmware.

Accordingly, once the microprocessor 1020 is started at the step 1008, the microprocessor 1020 starts the execution of the firmware, preferably a boot firmware. For example, the boot firmware may comprise software instruction for configuring one or more function of the processing system 10a, execute optional tests, instruct one or more microprocessors 1020 of the processing system 10a to execute a respective firmware. Thus, the boot firmware is usually a dedicated firmware just used during the start-up/boot of the processing system 10a.

For example, with respect to the tracking point checker circuit 30 described in the foregoing, the configuration data distributed during the configuration phase (step 1006) and/or the boot firmware (step 1008) may configure the timeout of the timer 312 (e.g., the field TIMEOUT, e.g., of the register TPC_CONFIG and optionally the register TPC_TOEXT) and/or the error reactions of the error combination circuit 314 (e.g., the fields TOREACT and WSREACT, e.g., of the register TPC_CONFIG). Moreover, in various embodiments, if required, the boot firmware may comprise instructions for starting the timer 312 (e.g., field START, e.g., of the register TPC_TIMER), as also described with respect to the request SRT shown in Figure 9. In various embodiments, the boot firmware may comprise software instructions for selecting one of the reference patterns RP1 to RPM (e.g., field SIGNNR, e.g., of the register TPC_CONFIG). For example, as mentioned before, in various embodiments, the boot firmware may comprise software instructions for determining a reset type and selecting one of the reference patterns RP1 to RPM as a function of the reset type.

In various embodiments, the boot firmware is configured to execute then further groups of software instructions, which comprise software instructions for setting bits of the register 304 (e.g., via the fields SIGNNR and TPID, e.g., of the register TPC_SIGN), as also described with respect to the set requests SET0 to SETK-1 shown in Figure 9.

For example, a first tracking point may correspond to the completion of the configuration of the tracking point checker circuit 30, i.e., once the configuration of the tracking point checker circuit 30 has been completed, e.g., the boot firmware may comprise software instructions for asserting at a step 1010 the bit 0 of the register 304.

Next, a series of software routines SR are executed by the boot firmware, as schematically shown via a step 1012. At the end of each software routines SR, a corresponding tracking point is signed, preferably in an incremental manner. As mentioned before, the number and position of the tracking points within the boot firmware are implementation-dependent and may vary with the complexity of the software. A higher number of tracking points provides finer-grained tracking and enhances error detection accuracy.

Moreover, depending on the reset type, some functions or software routines SR of the boot firmware may be skipped. As a result, the corresponding bits in the internal signature may remain unset ("0"), matching the expected signature value preconfigured for that specific execution path. This ensures that the final signature reflects only the functions/software routines SR actually executed, consistent with the selected reset context.

In various embodiments, upon completion of the (normal) software routines SR of the boot firmware, the boot firmware comprises software instructions for stopping at a step 1014 the timer 312 (e.g., field STOP, e.g., of the register TPC_TIMER), as also described with respect to the request STP shown in Figure 9.

Specifically, in various embodiments, in response to receiving the timer stop command STP, the timer circuit 312 is stopped and the comparison circuit 310 of the tracking point checker circuit 30 compares at a step 1016 the current tracking point signature/pattern CP, as determined by the signed/asserted bits, with the expected signature RP, e.g., the reference pattern RP selected as a function of the field SIGNNR of the register TPC_CONFIG register.

In response to determining that the patterns do correspond (output "Y" of the verification step 1016), the method terminates at a stop step 1020. For example, in this case, the boot firmware may start the execution of an application firmware.

Conversely, in response to determining that the patterns do not correspond (output "N" of the verification step 1016), the comparison circuit 310 asserts at a step 1018 the signal ERR_{S}, and the error combination circuit 314 asserts at a step 1018 the (possibly programmed) error signal ERR, internal reaction signal IR and/or external reaction signal ER.

In parallel, the tracking point checker circuit 30, e.g., the error combination circuit 314, monitors the error signal ERR_{T}. In fact, in case the timer stop command STP is not received before the timer circuit 312 reaches the maximum time, the timer circuit 312 asserts the error signal ERR_{T}, and the error combination circuit 314 asserts the (possibly programmed) error signal ERR, internal reaction signal IR and/or external reaction signal ER.

Thus, in the embodiment considered, the signature comparison occurs upon completion of the software execution and issuance of the stop command STP. However, as described in the foregoing, additionally or alternatively, the comparison circuit 310 may be configured to perform a (partial) pattern comparison during runtime. For example, in various embodiments, in response to receiving a set request SET for signing a given tracking point (e.g., indicated via the field TPID) by asserting one or more respective bits of the register 304, the tracking point checker circuit 30 is configured to validate the bits of the reference pattern RP up to the position of the bits associated with the given tracking point, thereby progressivelyvalidating the bits of the register 304. For example, consider a 4-bit signature with an expected value of "1101":
- upon signing bit index 0, the tracking point checker circuit 30 verifies whether the first bit of the reference pattern is set to "1";
- upon signing bit index 2, the tracking point checker circuit 30 verifies whether the three least significant bits of the reference pattern RP are set to "101"; and
- upon signing bit index 3, the tracking point checker circuit 30 verifies whether the four least significant bits of the reference pattern RP are set to "1101";

The advantage of partial signature comparison is the ability to detect deviations or errors at an earlier stage during the execution of the boot firmware.

In various embodiments, the tracking point checker circuit 30 may support plural operating modes, e.g., a comparison when receiving the stop request STP and a partial comparison when receiving the programming requests SET for the tracking points. In various embodiments, in this case, the register interface 302 may also comprise a field for enabling the mode of operation, i.e., for enabling the comparison when receiving the stop request STP and/or the partial comparison when receiving the programming requests SET for the tracking points

Accordingly, the present disclosure provides a novel and hardware-anchored solution for verifying the integrity of the software initialization flow, particularly during the execution of boot firmware. Unlike conventional approaches that rely solely on software or on complex and costly lockstep CPU architectures, the proposed solution implements a dedicated tracking point checker circuit 30, capable of verifying that predetermined execution tracking points have been correctly reached during the firmware execution. This allows the system to achieve high fault-detection reliability, meeting the stringent ASIL-D safety requirements, without incurring the area and power penalties typical of fully redundant solutions.

The tracking point checker circuit 30 operates by monitoring a bit pattern CP stored in a dedicated tracking point signature register 304, which is updated in a controlled manner by the boot firmware itself through a register interface 302. Each bit or subset of bits of the signature corresponds to a defined tracking point in the firmware - typically associated with the successful completion of a critical subroutine or initialization task. As the firmware progresses, specific instructions are executed to assert the corresponding bits in the register 304, thereby constructing a current pattern CP that reflects the actual control flow of the initialization code.

To validate this runtime-constructed signature, the tracking point checker circuit 30 includes a further register 306 that stores a reference pattern RP, representing the expected execution path. Preferably, the reference pattern RP is loaded autonomously from a non-volatile memory 104 upon system reset, using a dedicated hardware configuration circuit (e.g., circuit 108 or 308), and is therefore protected against software errors. This ensures the integrity and authenticity of the reference data from the outset of execution.

Once the initialization sequence is deemed complete, e.g., signaled via a specific stop command STP sent by the firmware, the tracking point checker circuit 30 may trigger a full-pattern comparison between the current signature CP and the reference signature RP. If the two patterns do not match, indicating an unexpected control flow or a missed tracking point, the tracking point error signal ERR_{S} is asserted. Additionally or alternatively, the circuit may also be configured to perform partial comparisons on-the-fly as each tracking point is set during execution. This enables the detection of deviations at an earlier stage, before the final stop command is reached, which further increases the system's responsiveness and safety coverage.

In various embodiments, to address scenarios in which the firmware fails to complete (e.g., due to a stall or deadlock), the tracking point checker circuit 30 integrates an internal watchdog timer 312. This timer is configured with a (e.g., programmable) timeout value and is started concurrently with the firmware execution or already in response to the reset. If the stop command is not received before expiration, a timeout error signal ERR_{T} is generated. The error signals ERR_{S} and ERR_{T} may be routed to a reaction management circuit 314, which is capable of triggering suitable responses such as internal resets, interrupt requests, or safe-state pin transitions. Preferably, this circuit may be integrated within the tracking point checker 30.

The solution further supports multiple reference patterns (RP1 to RPM) to accommodate different boot paths depending on the system reset context, such as a power-on reset versus a functional reset. In various embodiments, the appropriate reference pattern can be selected dynamically, either via the register interface 302 or directly based on a hardware-detected reset type.

In summary, the described tracking point checker circuit 30 provides a hardware-level mechanism for runtime verification of software execution paths, offering several advantages, such as robustness against software failure, early error detection, reduced reliance on redundant processing hardware, and possible integration with system-wide fault management logic. These features make it particularly suitable for safety-critical embedded systems requiring deterministic and verifiable initialization flows.

Of course, without prejudice to the principle of the invention, the details of construction and the embodiments may vary widely with respect to what has been described and illustrated herein purely by way of example, without thereby departing from the scope of the present invention, as defined by the ensuing claims. For example, while the present disclosure mainly relates to the specific case of the execution of a boot software, the tracking point checker circuit 30 may also be used by an application firmware.

## Claims

1. A processing system (10a) configured to monitor a plurality (N) of tracking points, said processing system (10a) comprising:
- a microprocessor (102; 1020) configured to execute a firmware comprising software instructions;
- a non-volatile memory (104) configured to store a reference tracking point bit pattern (RP) comprising for each tracking point respective one or more reference bits; and
- a tracking point checker circuit (30) comprising:
- a register (304) configured to store a tracking point bit pattern (CP) comprising for each tracking point respective one or more bits;
- a register interface (302) configured to:
- receive a set request (SET) from said microprocessor (102; 1020), wherein said set request (SET) indicates (TPID) that a given tracking point has been reached, and
- in response to receiving a set request (SET), assert at least one bit of the one or more bits associated with the tracking point indicated (TPID) in said set request (SET); and
- a comparison circuit (310) configured to:
- compare the respective one or more bits of said tracking point bit pattern (CP) associated with at least one tracking point with the respective one or more reference bits of said reference tracking point bit pattern (RP), and
- in response to determining that the respective one or more bits of said tracking point bit pattern (CP) associated with at least one tracking point do not correspond to the respective one or more reference bits of said reference tracking point bit pattern (RP), assert a tracking point error signal (ERR_{S}).

2. The processing system (10a) according to Claim 1, wherein said set request (SET) comprises a tracking point identifier field (TPID) indicating the tracking point that has been reached, and
- said register interface (302) is configured to, in response to receiving said set request (SET), assert the one or more bits associated with the tracking point indicated by said tracking point identifier field (TPID); or
- said set request (SET) comprises a bit pattern to be written to the one or more bits associated with the tracking point indicated by said tracking point identifier field (TPID).

3. The processing system (10a) according to Claim 1 or Claim 2, wherein said tracking point checker circuit (30) comprises a further register (306) configured to store said reference tracking point bit pattern (RP), and wherein said processing system (10a) comprises a configuration circuit (108; 308) configured to, in response to a reset request of said processing system (10a), transfer said reference tracking point bit pattern (RP) from said non-volatile memory (104) to said further register (306).

4. The processing system (10a) according to any of the previous claims, wherein said tracking point checker circuit (30) is configured to:
- receive via said register interface (302) a stop request (STP) from said microprocessor (102; 1020), and
- in response to receiving said stop request (STP), determine via said comparison circuit (310) whether said tracking point bit pattern (CP) corresponds to said reference tracking point bit pattern (RP).

5. The processing system (10a) according to any of the previous claims, wherein said tracking point checker circuit (30) is configured to:
- in response to receiving a set request (SET), compare via said comparison circuit (310) the one or more bits of said tracking point bit pattern (CP) associated with the tracking point indicated (TPID) in said set request (SET) with the respective one or more reference bits of said reference tracking point bit pattern (RP).

6. The processing system (10a) according to Claim 5, wherein said tracking point checker circuit (30) is configured to:
- in response to receiving a set request (SET), compare via said comparison circuit (310) a given number of least significant bits of said tracking point bit pattern (CP) with the respective least significant bits of said reference tracking point bit pattern (RP), wherein the number of least significant bits is determined as a function of the tracking point indicated (TPID) in said set request (SET).

7. The processing system (10a) according to any of the previous claims, wherein the reference tracking point bit pattern (RP) comprises for each tracking point a single reference bit and said tracking point bit pattern (CP) comprises for each tracking point a single bit.

8. The processing system (10a) according to any of the previous claims, comprising a timer circuit (312) configured to monitor the execution time of said firmware and to assert a timeout error signal (ERR_{T}) in response to determining that a predetermined timeout period (TIMEOUT) has elapsed.

9. The processing system (10a) according to Claim 8, wherein said register interface (302) configured to:
- receive a start request (SRT) or stop request (STP), and to start or stop said timer circuit (312) in response to said start request (SRT) or stop request (STP), respectively; and/or
- receive a request for configuring said predetermined timeout period (TIMEOUT).

10. The processing system (10a) according to any of the previous claims, wherein said tracking point checker circuit (30) comprises an error management circuit (314) configured to:
- receive said tracking point error signal (ERR_{S}) and optionally said timeout error signal (ERR_{T}), and
- in response to determining that said tracking point error signal (ERR_{S}) and/or optionally said timeout error signal (ERR_{T}) is asserted, assert at least one of:
- an error signal provided to a fault collection and error management circuit (120) of said processing system (10a),
- at least one internal reaction signal (IR), or
- at least one external reaction signal (ER).

11. The processing system (10a) according to Claim 10, wherein said error management circuit (314) is configurable via said register interface (302).

12. The processing system (10a) according to any of the previous claims, wherein said non-volatile memory (104) is configured to store a plurality (M) of reference tracking point bit patterns (RP1-RPM), and said tracking point checker circuit (30) is configured to provide to said comparison circuit (310) a reference pattern (RP) selected via said register interface (302) or via a reset type signal indicative of a functional or destructive reset.

13. The processing system (10a) according to any of the previous claims, wherein said firmware comprises software instructions for sending a plurality of set requests (SET) for different tracking points to said register interface (302) of said tracking point checker circuit (30).

14. The processing system (10a) according to any of the previous claims, integrated in an integrated circuit.

15. A device, such as a vehicle, comprising a plurality of processing systems (10a) according to any of the previous claims, wherein said processing systems (10a) are connected via a further communication system (20).

16. A method of operating a processing system (10a) according to any of the previous Claims 1 to 14, comprising the steps of:
- storing (1004) a reference tracking point bit pattern (RP) to said non-volatile memory (104); and
- executing (1008) via said microprocessor (102; 1020) a firmware, wherein said firmware comprises software instructions for sending (1010, 1012) a plurality of set requests (SET) for different tracking points to said register interface (302) of said tracking point checker circuit (30), whereby:
- the register interface (302) asserts at least one bit of the one or more bits associated with the tracking point indicated (TPID) in each set request (SET), and
- the comparison circuit (310) asserts the tracking point error signal (ERR_{S}) in response to determining that the respective one or more bits of said tracking point bit pattern (CP) associated with at least one tracking point do not correspond to the respective one or more reference bits of said reference tracking point bit pattern (RP).
